(19) Europäisches Patentamt
European Patent Office
Office européen des brevets

(11) **EP 2 840 528 B1**

(12) **EUROPEAN PATENT SPECIFICATION**

(45) Date of publication and mention
of the grant of the patent:
**03.04.2019 Bulletin 2019/14**

(51) Int Cl.:
**G06K 9/00** (2006.01)     **G06T 7/20** (2017.01)

(21) Application number: **14181202.4**

(22) Date of filing: **15.08.2014**

(54) **Method and apparatus for tracking object**

Verfahren und Vorrichtung zur Verfolgung eines Objekts

Procédé et appareil de suivi d'un objet

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2013 CN 201310364526**

(43) Date of publication of application:
**25.02.2015 Bulletin 2015/09**

(73) Proprietor: **Ricoh Company, Ltd.**
**Tokyo 143-8555 (JP)**

(72) Inventors:
• **You, Ganmei**
  **Haidian District, Beijing 100044 (CN)**
• **Lu, Yaojie**
  **Haidian District, Beijing 100044 (CN)**
• **Shi, Zhongchao**
  **Haidian District, Beijing 100044 (CN)**
• **Wang, Gang**
  **Haidian District, Beijing 100044 (CN)**
• **Liu, Tong**
  **Haidian District, Beijing 100044 (CN)**

(74) Representative: **White, Duncan Rohan et al**
**Marks & Clerk LLP**
**Fletcher House (2nd Floor)**
**Heatley Road**
**The Oxford Science Park**
**Oxford OX4 4GE (GB)**

(56) References cited:
**US-A1- 2010 208 063**

• **BASTIAN LEIBE ET AL: "Coupled Detection and Trajectory Estimation for Multi-Object Tracking", COMPUTER VISION, 2007. ICCV 2007. IEEE 11TH INTERNATIONAL CONFERENCE O N, IEEE, PI, 1 October 2007 (2007-10-01), pages 1-8, XP031194425, ISBN: 978-1-4244-1630-1**
• **ZHENGQIANG JIANG ET AL: "Multiple Pedestrian Tracking Using Colour and Motion Models", DIGITAL IMAGE COMPUTING: TECHNIQUES AND APPLICATIONS (DICTA), 2010 INTERNATIONAL CONFERENCE ON, IEEE, PISCATAWAY, NJ, USA, 1 December 2010 (2010-12-01), pages 328-334, XP031853193, ISBN: 978-1-4244-8816-2**
• **A. ESS ET AL: "Object Detection and Tracking for Autonomous Navigation in Dynamic Environments", THE INTERNATIONAL JOURNAL OF ROBOTICS RESEARCH, vol. 29, no. 14, 1 December 2010 (2010-12-01), pages 1707-1725, XP055170047, ISSN: 0278-3649, DOI: 10.1177/0278364910365417**

**Description**

**BACKGROUND OF THE INVENTION**

**1. Field of the Invention**

The present invention generally relates to image recognition, and specifically, a method and an apparatus for tracking an object.

**2. Description of the Related Art**

The object tracking technology is widely used in the fields such as driving assistance, vehicle recognition and driving warning.

The template matching tracking is a conventional object tracking method. In the U.S. Patent US7660438B2, a method and an apparatus for tracking an object prior to an imminent collision are disclosed. In this patent, an object is detected within a first operational range of an object tracker, a classification of the object is determined and the object is tracked by the object tracker, the object is detected within a second operational range of a collision detector, and a safety measure is activated based on the classification by the collision detector. The main gist of the patent is to previously store templates of an object for positions and depths, and to perform a matching between the detected object and the templates. However, such a method cannot be applied in cases where the size of the tracked object and the templates for the positions and depths are not known.

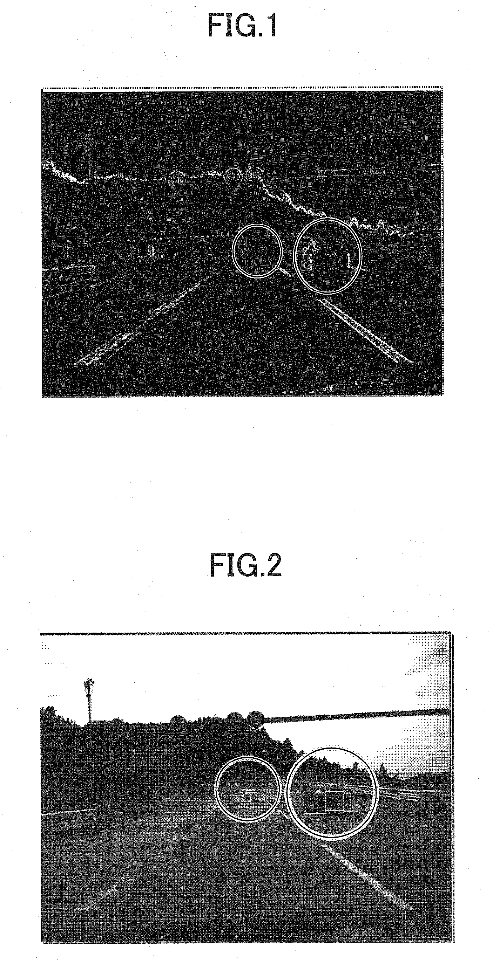

Recently, an object on the road (such as a vehicle) is detected and tracked by using a disparity map, and a result that is better than tracking using a two-dimensional image is obtained. As a common tracking method, a predication-detection-correction method based on a center is provided. However, in actuality, an obtained disparity map of an object is often incomplete, and there is no corresponding disparity value in the disparity map for some parts of the object (such as horizontal edges); therefore, only a part of the object can be detected in this case. For example, in the disparity map illustrated in FIG. 1, the part of the vehicle between two circles does not have disparity values; accordingly, as illustrated in the grayscale image of FIG. 2, only the left half of the vehicle in the left circle has been detected, and the vehicle in the right circle has been erroneously detected as three objects. In this case, an incorrect tracking result may be obtained, if tracking is performed based on a detection result of the above prediction-detection-correction method based on a center.

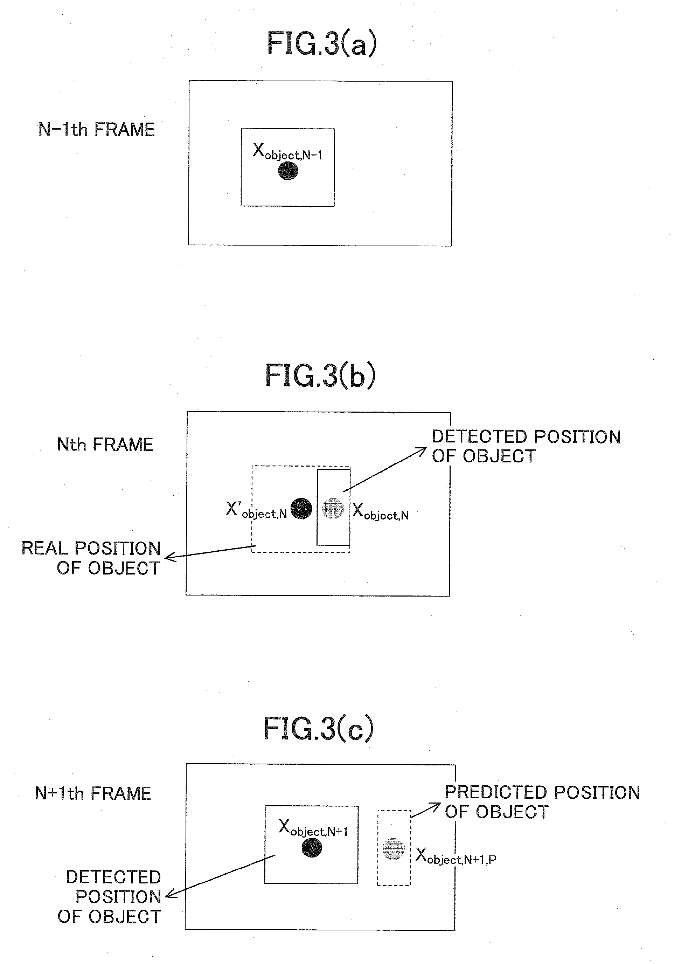

Specifically, as illustrated in FIG. 3(a), it is assumed that an outer frame of a tracked object (such as a vehicle) in the image of the N-1th frame is illustrated by the rectangular frame in FIG. 3(a), and the abscissa of the center of the detected object is $X_{object,N-1}$. In the Nth frame, only a part of the object can be detected since the disparity map is incomplete. That is to say, the outer frame of the detected object is illustrated by the solid line rectangular frame in FIG. 3(b), and the abscissa of the center of the determined object is $X_{object,N}$; however, in actuality, the real outer frame of the object in the Nth frame is illustrated by the dashed line frame in FIG. 3(b), and the real abscissa of the object should be $X'_{object,N}$. According to the prediction-detection-correction method based on a center, the outer frame (as illustrated by the dashed line frame in FIG. 3(c)) of the object in the N+1th frame and the abscissa of the center of the object is predicted based on the abscissa of the center of the object of the N-1th frame and the abscissa of the center of the object detected from the Nth frame: $X_{object,N+1,P} = X_{object,N} + (X_{object,N} - X_{object,N-1})$. Accordingly, there is a possibility that the prediction result cannot be matched with the detection result in the N+1th frame, since the detection result of the object in the N+1th frame is illustrated by the solid line frame in FIG. 3(c). Thus, there is a possibility that it is incorrectly determined that the tracked object is lost and an incorrect tracking result is obtained.

Therefore, it is a necessary to provide an object tracking technology that can obtain a good tracking result in cases where the size of the tracked object is not known and the disparity map of the tracked object is incomplete.

BASTIAN LEIBE ET AL: "Coupled Detection and Trajectory Estimation for Multi-Object Tracking", COMPUTER VISION, 2007. ICCV 2007. IEEE 11TH INTERNATIONAL CONFERENCE O N, IEEE PI, 1 October 2007 (20047-10-01), pages 1-8, XP031194425, ISBN: 978-1-4244-1630-1 discloses multi-object tracking using a Kalman filter for each trajectory prediction. Each trajectory candidate is evaluated and is updated by a weighted mean of its predicted position and the supporting observations of position.

The invention is in the method of claim 1 and the apparatus of claim 6.

According to the object tracking technology according to the embodiment of the present invention, a good tracking result can be obtained in cases where the size of the tracked object is not known and the disparity map of the tracked object is incomplete.

**BRIEF DESCRIPTION OF THE DRAWINGS**

FIG. 1 is a schematic drawing illustrating an example of an incomplete disparity map;

FIG. 2 is a schematic drawing illustrating an example of an incorrect detection result displayed in a grayscale image;

FIGs. 3(a) to 3(c) are schematic drawings illustrating an object tracking result based on the prior art;

FIG. 4 is a schematic drawing illustrating a scene of an object tracking technology according to an embodiment of the present invention;

FIG. 5 is a flowchart illustrating an object tracking method using a disparity map according to the first embodiment of the present invention;

FIGs. 6(a) to 6(d) are schematic drawings illustrating a detection result of a tracked object of the N-2th frame, a detection result of the tracked object of the N-1th frame, a predication result of the tracked object of the Nth frame, a detection result of the tracked object of the Nth frame, respectively;

FIG. 7 is a flowchart illustrating a confidence level calculation method according to the first embodiment of the present invention;

FIG. 8 is a schematic drawing illustrating the processing of the center of an object detected from the current frame;

FIG. 9 is a functional configuration block diagram illustrating an object tracking apparatus according to an embodiment of the present invention; and

FIG. 10 is an overall hardware block diagram illustrating an object tracking system according to the embodiment of the present invention.

## DETAILED DESCRIPTION OF THE PREFERRED EMBODIMENTS

In the following, embodiments of the present invention are described in detail with reference to the accompanying drawings, so as to facilitate the understanding of the present invention.

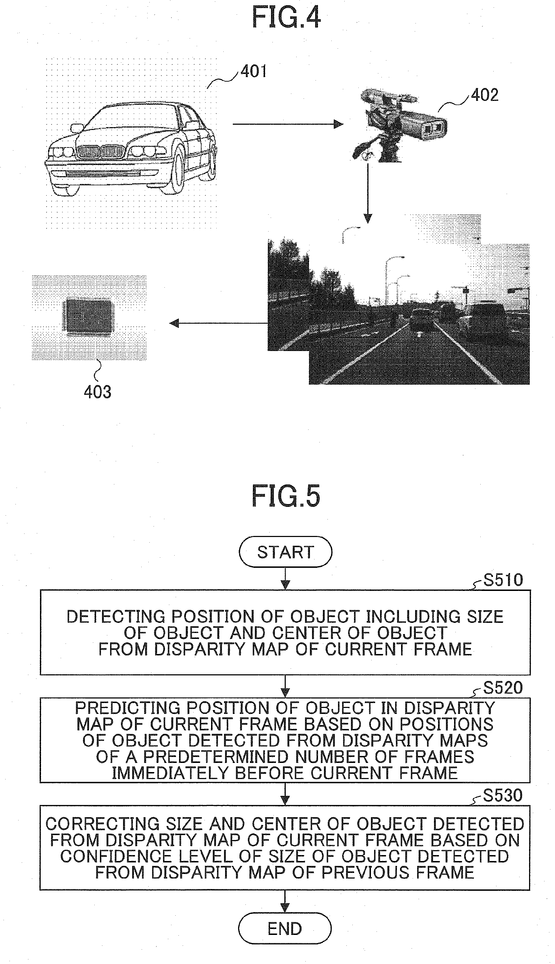

FIG. 4 is a schematic drawing illustrating a scene of an object tracking technology according to an embodiment of the present invention. As illustrated in FIG. 4, a binocular camera 402 is disposed in a vehicle 401 by a user, and the binocular camera 402 tracks and photographs a vehicle running on the road to obtain a plurality of continuous frames of left-view images and right-view images. A plurality of continuous frames of disparity maps are obtained by calculation of a processing device 403 such as a computer chip based on the continuous frames of left-view images and right-view images taken by the binocular camera 402, and the photographed vehicle is detected and tracked by using the disparity maps. It should be noted that, the tracked object described below may be considered as a vehicle running on the road.

<First Embodiment>

FIG. 5 is a flowchart illustrating an object tracking method using a disparity map according to the first embodiment of the present invention.

As illustrated in FIG. 5, in step S510, the position of the object is detected from a disparity map of the current frame, and the position of the object includes the size of the object and the center of the object.

It should be noted that, regarding the disparity map, any one image of a pair of images is regarded as the reference image, the size of the disparity map is the size of the reference image, and the grayscale values of the points (pixels) are the disparities of the corresponding points in the reference image. The disparity map may be obtained by any method in the art, and the detailed description is omitted here.

Furthermore, as described above, the detection of the object by a disparity map is not the key of the present invention, the object may be detected from a disparity map by any method in the art such as a method based on connected component analysis, or a method based on a U-disparity map or a V-disparity map, and the detailed description is omitted here.

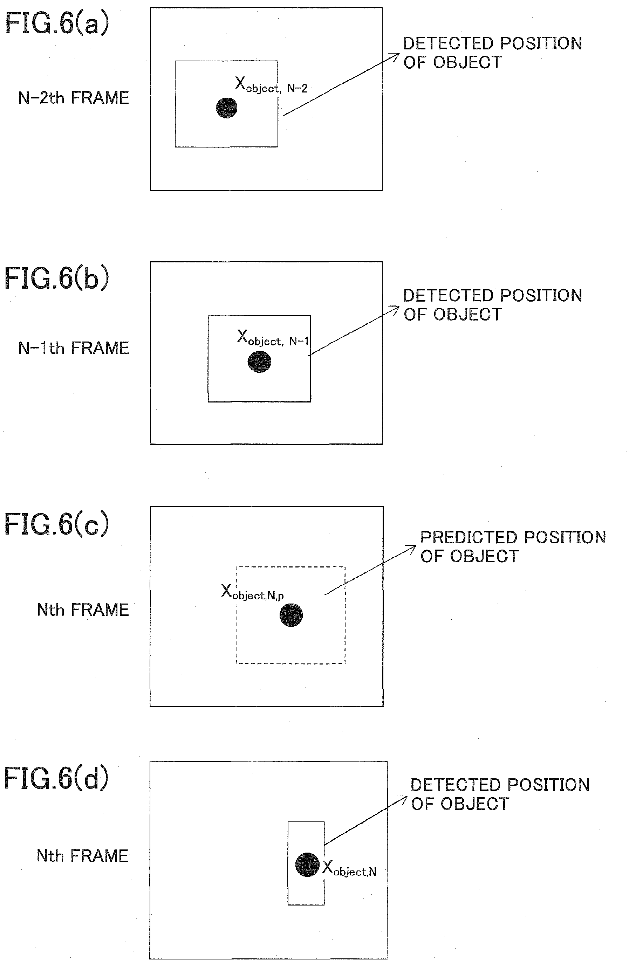

In the present invention, the position of the object is represented by the size of the object and the center of the object. As illustrated in FIG. 6(d), it is assumed that the position of the object detected from the disparity map of the current frame (the Nth frame) is illustrated by the rectangular frame in FIG. 6(d). Specifically, the rectangular frame represents the outer frame of the object, the size of the outer frame may be represented by the length and the width, the circle dot in the rectangular frame represents the center of the object determined based on the outer frame, and the X-coordinate of the center is represented by $X_{object,N}$. Furthermore, preferably, the size of the object may also include a movement distance of the object in the depth direction from the previous frame to the current frame, and the movement distance may be obtained from the information of the disparity map itself.

In step S520, the position of the object in the disparity map of the current frame is predicted based on the positions of the object detected from the disparity maps of a predetermined number of frames immediately before the current frame.

For the prediction of the position of the object in the current frame based on historical frames, as a basic implementation, the movement speed of the object may be determined based on the previous two frames, so that the position of the object in the current frame is predicted.

For example, as illustrated in FIGs. 6(a) and 6(b), the center coordinate of the tracked object detected from the N-2th frame is Object ($x_{object,N-2}$, $y_{object,N-2}$, $z_{object,N-2}$), where the Z coordinate represents the position of the object in the depth direction, the width of the object is $w_{N-2}$, the height is of the object $h_{N-2}$, and the movement distance of the object in the depth direction from the N-3th frame to the N-2th frame is $d_{N-2}$; and the center coordinate of the tracked object detected from the N-1th frame is Object ($x_{object,N-1}$, $y_{object,N-1}$, $z_{object,N-1}$), where the width of the object is $w_{N-1}$, the height of the object is $h_{N-1}$, and the movement distance of the object in the depth direction is $d_{N-1}$. The movement speed of the object may be calculated by Object ($\Delta x_{c,N}$, $\Delta y_{c,N}$, $\Delta z_{c,N}$), where $\Delta x_{c,N}=\Delta x_{c,N}-\Delta x_{c,N-1}$, $\Delta y_{c,N}=\Delta y_{c,N}-\Delta y_{c,N-1}$, $\Delta z_{c,N}=\Delta z_{c,N}-\Delta z_{c,N-1}$, since the disparity maps are obtained at a constant speed and the time interval between two adjacent frames is a unit time.

It may be considered that the object moves between the adjacent frames at a constant speed, since the time interval between two adjacent frames is very short. Accordingly, as illustrated in FIG. 6(c), it may be predicted that the center of the object in the current frame (the Nth frame) is Object ($x_{object,N,p}$, $y_{object,N,p}$, $z_{object,N,p}$), where $x_{object,N,p}=x_{object,N-1},+\Delta x_{c,N}$, $y_{object,N,p}=y_{object,N-1},+\Delta y_{c,N}$, $z_{object,N,p}=z_{object,N-1},+\Delta z_{c,N}$. Additionally, it may be considered that the width and height of the object in the disparity map of the Nth frame is the width and height of the object in the disparity map of the N-1th frame, since the width and height of the object in the real world are changeless.

In the above description, the position of the object in the disparity map of the current frame is predicted based on the position of the object detected from the disparity maps of the previous two frames, but it is just an example. In actuality, if it is necessary, the position of the object in the disparity map of the current frame may be predicted based on the positions of the object detected from more historical frames (for example, the previous three frames).

In step S530, the position of the object detected from the disparity map of the current frame is corrected based on the confidence level of the size of the object detected from the disparity map of the previous frame, so as to obtain a corrected position, if the position of the object detected from the disparity map of the current frame matches the predicted position of the object.

If the position of the object detected from the disparity map of the current frame matches the predicted position of the object, it is considered that the tracking object has been tracked in the current frame, and accordingly, the position of the detected object is corrected in this step. If the position of the object detected from the disparity map of the current frame does not match the predicted position of the object, it is considered that the tracking object has been lost, and no further processing is performed.

The key of the present invention is not how to determine whether the position of the object detected from the disparity map of the current frame matches the predicted position of the object or not, and it may be determined by a rule set as needed. As a basic implementation, a search may be performed within a region with a predetermined size where the center is the center of the predicted object. If no detected object is found in the region, it is considered that they are not matched; otherwise, it is considered that the position of the object detected from the disparity map of the current frame matches the predicted position of the object.

If the position of the object detected from the disparity map of the current frame matches the predicted position of the object, the position of the detected object is corrected by using the confidence level of the disparity map. The confidence level represents the reliability of the result of each of the frames, and the confidence level may be determined based on any rule set as needed. In order to obtain an accurate confidence level, preferably, the confidence level may be determined by accumulating frames. The disparity map is often incomplete as described above, and the position of the object detected from the disparity map of the current frame may not be correct; therefore, a more accurate detection result can be obtained, by correcting the position of the object detected from the disparity map of the current frame based on the position of the object detected from the disparity map of the previous frame and the confidence level.

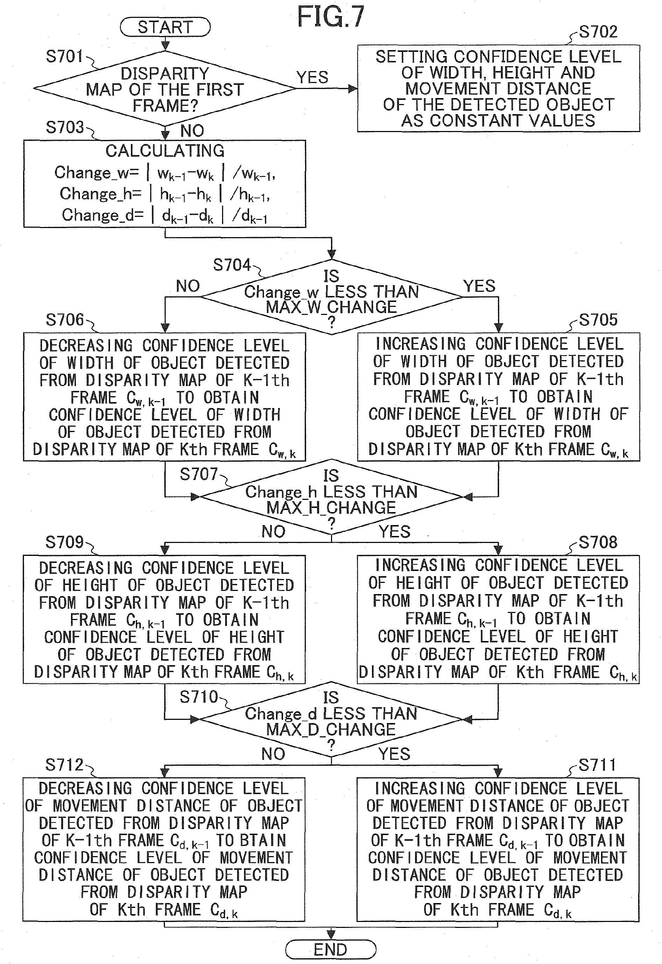

FIG. 7 is a flowchart illustrating a confidence level calculation method according to the first embodiment of the present invention. In the confidence level calculation method, the confidence of the width, height and movement distance of the object detected from each of the frames is calculated.

As illustrated in FIG. 7, in step S701, it is determined whether the confidence level is calculated for the disparity map of the first frame. If it is yes, in step S702, the confidence level of the width, the confidence level of the height and the confidence level of the movement distance of the object detected from the disparity map of the first frame are set as a constant value, for example 1. If it is determined that the confidence level is not calculated for the disparity map of the first frame, in step S703, it is calculated that Change_w=$|w_{k-1}-w_k|/w_{k-1}$, Change_h=$|h_{k-1}-h_k|/h_{k-1}$, Change_d=$|d_{k-1}-d_k|/d_{k-1}$, where k is the frame number, k>l, $w_{k-1}$, $h_{k-1}$ and $d_{k-1}$ are the corrected width, the corrected height and the corrected movement distance in the depth direction of the object in the disparity map of the K-1th frame, respectively, and $w_k$, $h_k$ and $d_k$ are the width, the height and the movement distance in the depth direction of the object detected from the disparity map of the Kth frame, respectively.

Next, in step S704, it is determined whether the calculated Change_w is less than a predetermined width threshold MAX_W_CHANGE. And then, the confidence level of the width of the object detected from the disparity map of the Kth frame is determined based on the determination result of step S704. The confidence level of the width may be determined by any method, as long as the following condition is satisfied. If Change_w is less than the width threshold MAX_W_CHANGE, it means that the detected width is almost unchanged, and the confidence level of the width of the object detected from the disparity map of the Kth frame $C_{w,k}$ is obtained by increasing the confidence level of the width of the object detected from the disparity map of the K-1th frame $C_{w,k-1}$ (step S705); otherwise, the confidence level of the width of the object detected from the disparity map of the Kth frame $C_{w,k}$ is obtained by decreasing the confidence level of the width of the object detected from the disparity map of the K-1th frame $C_{w,k-1}$ (step S706) . As an example, if Change_w<MAX_W_CHANGE, calculating $C_{w,k}=C_{w,k-1}+(\text{MAX\_CONFIDENCE-Change})/\text{MAX\_W\_CHANGE}$ is performed; if Change_w $\geqq$ MAX_W_CHANGE, calculating $C_{w,k}=C_{w,k-1}+(\text{MAX\_W\_CHANGE-Change})/(1-\text{MAX\_W\_CHANGE})$ is performed, where MAX_CONFIDENCE is a predetermined maximum confidence level. It should be noted that, the above calculation method is just an example, and the present invention is not limited to this example.

Similarly, for the height confidence level, it is determined whether the calculated Change_h is less than a predetermined height threshold MAX_H_CHANGE (step S707). If Change_h is less than the height threshold MAX_H_CHANGE, it means that the detected height is almost unchanged, and the confidence level of the height of the object detected from the disparity map of the Kth frame $C_{h,k}$ is obtained by increasing the confidence level of the height of the object detected from the disparity map of the K-1th frame $C_{h,k-1}$ (step S708); otherwise, the confidence level of the height of the object detected from the disparity map of the Kth frame $C_{h,k}$ is obtained by decreasing the confidence level of the height of the object detected from the disparity map of the K-1th frame $C_{h,k-1}$ (step S709) . Similarly, for the movement distance confidence level, it is determined whether the calculated Change_d is less than a predetermined movement distance threshold MAX_D_CHANGE (step S710). If Change_d is less than the movement distance threshold MAX_D_CHANGE, the confidence level of the movement distance of the object detected from the disparity map of the Kth frame $C_{d,k}$ is obtained by increasing the confidence level of the movement distance of the object detected from the disparity map of the K-1th frame $C_{d,k-1}$ (step S711); otherwise, the confidence level of the movement distance of the object detected from the disparity map of the Kth frame $C_{d,k}$ is obtained by decreasing the confidence level of the movement distance of the object detected from the disparity map of the K-1th frame $C_{d,k-1}$ (step S712).

According to the above method, the confidence of the width, height and movement distance of the object detected from each of the frames can be calculated.

Returning to FIG. 5, as described above, in step S530, the size and center of the object detected from the disparity map of the current frame will be corrected based on the confidence level of the size of the object detected from the disparity map of the previous frame.

First, the correction of the size of the object detected from the disparity map of the current frame based on the confidence level of the disparity map of the previous frame will be described.

As described above, the size of the object detected from the disparity map of the current frame may be not correct; since the size of the object in the real world is changeless, the detection result of the current frame may be corrected based on the size of the object determined in historical frames. Specifically, the size of the object detected from the disparity map of the current frame may be corrected by using a corrected size of the object in the disparity map of the previous frame and the calculated confidence level of the size of the object, so as to obtain a more accurate result.

For example, as illustrated in expression (1), a weighting of the corrected size of the object in the disparity map of the previous frame and the size of the object detected from the disparity map of the current frame may be performed, and the value obtained by the weighting is set as the corrected size of the object in the disparity map of the current frame.

$$w_{N,\text{correct}} = (w_{N-1,\text{correct}} \times C_{w,N-1} + w_{N,\text{detection}} \times 1)/(C_{w,N-1} + 1)$$
$$h_{N,\text{correct}} = (h_{N-1,\text{correct}} \times C_{h,N-1} + h_{N,\text{detection}} \times 1)/(C_{h,N-1} + 1)$$
$$d_{N,\text{correct}} = (d_{N-1,\text{correct}} \times C_{d,N-1} + d_{N,\text{detection}} \times 1)/(C_{d,N-1} + 1) \quad \ldots\ldots (1)$$

In expression (1), $w_{N,\text{correct}}$, $h_{N,\text{correct}}$, and $d_{N,\text{correct}}$ represent the corrected width, height and movement distance of the object in the disparity map of the current frame (the Nth frame), respectively; $w_{N-1,\text{correct}}$, $h_{N-1,\text{correct}}$, and $d_{N-1,\text{correct}}$ represent the corrected width, height and movement distance of the object in the disparity map of the previous frame (the N-1th frame), respectively; $w_{N,\text{detection}}$, $h_{N,\text{detection}}$, and $d_{N,\text{detection}}$ represent the width, height and movement distance of the object in the disparity map of the current frame, respectively; and $C_{w,N-1}$, $C_{h,N-1}$, and $C_{d,N-1}$ represent the confidence levels of the width, height and movement distance of the object detected from the disparity map of the previous frame, respectively.

The accuracy of the corrected size depends on the accuracy of the detected size to some extent, therefore, the confidence level of the detected size of the object in the previous frame actually reflects the confidence level of the corrected size in the previous frame. Accordingly, in expression (1), the weights of the corrected width, height and movement distance of the object in the disparity map of the previous frame are set as the confidence levels of the width, height and movement distance of the object detected from the disparity map of the previous frame, respectively; and the weights of the width, height and movement distance of the object detected from the disparity map of the current frame are set as 1. It should be noted that, the weights set above and the method for correcting the size of the object detected from the disparity map of the current frame by a weighting method are just examples; the present invention is not limited to these examples, and different weights may be set as needed and the size of the object detected from the current frame may be corrected by any method.

In the following, the correction of the center of the object detected from the disparity map of the current frame based on the confidence level of the disparity map of the previous frame will be described.

The center of the object detected from the disparity map of the current frame may be not correct; thus it may be corrected based on the center of the object in the disparity map of the current frame predicted in step S520. Specifically, the center of the object detected from the disparity map of the current frame may be corrected based on the predicted center of the object in the disparity map of the current frame and the confidence level of the size of the object detected from the disparity map of the previous frame, so as to obtain a more accurate result.

For example, as illustrated in expression (2), a weighting of the predicted center coordinates of the object in the disparity map of the current frame and the center coordinates of the object detected from the disparity map of the current frame may be performed, and the value obtained by the weighting is set as the corrected center coordinates of the object in the disparity map of the current frame.

$$X_{object,\ N,correct} = (C_{w,N-1} \times X_{object,N,p} + X_{object,N,detection} \times 1)/(C_{w,N-1} + 1)$$

$$Y_{object,\ N,correct} = (C_{h,N-1} \times Y_{object,N,p} + Y_{object,N,detection} \times 1)/(C_{h,N-1} + 1)$$

$$Z_{object,\ N,correct} = (C_{d,N-1} \times Z_{object,N,p} + Z_{object,N,detection} \times 1)/(C_{d,N-1} + 1) \quad \ldots\ldots(2)$$

In expression (2), $X_{object,N,correct}$, $Y_{object,N,correct}$, and $Z_{object,N,correct}$ represent the corrected center coordinates of the object in the disparity map of the current frame (the Nth frame); $X_{object,N,p}$, $Y_{object,N,p}$, and $Z_{object,N,p}$ represent the predicted center coordinates of the object in the disparity map of the current frame; $X_{object,N,detection}$, $Y_{object,N,detection}$, and $Z_{object,N,detection}$ represent the center coordinates of the object detected from the disparity map of the current frame; and $C_{w,N-1}$, $C_{h,N-1}$, and $C_{d,N-1}$ represent the confidence levels of the width, height and movement distance of the object detected from the disparity map of the previous frame (the N-1th frame), respectively.

In step S520, the center of the object in the current frame is predicted based on the center of the object in the previous frame, and the x, y and z coordinates of the center of the object in the previous frame are determined based on the width, height and movement distance of the object detected from the previous frame; therefore, the confidence level of the detected size of the object in the previous frame actually reflects the confidence level of the predicted center of the object in the current frame. Accordingly, in expression (2), the weights of the x, y and z axis coordinates of the predicted center of the object in the current frame are set as the confidence levels of the width, height and movement distance of the object detected from the disparity map of the previous frame, respectively; and the weights of the width, height and movement distance of the object detected from the disparity map of the current frame are set as 1. It should be noted that, the weights set above and the method for correcting the center of the object detected from the disparity map of the current frame by a weighting method are just examples; the present invention is not limited to these examples, and different weights may be set as needed and the center of the object detected from the current frame may be corrected by any method. Additionally, as illustrated in expression (2), the y-axis coordinate is also corrected in the above example, but it is not required. Since the slope of the road surface is almost changeless between two adjacent frames, it may be considered that the road surface is flat, and the y-axis coordinate of the center of the detected object is often correct; therefore, the y-axis coordinate of the center of the object detected from the current frame may also not be corrected.

As an example of the method for detecting and tracking the object from the Nth frame, that appeared in the N-1th frame, the example of the N-1th frame and Nth frame is described above. It should be noted that, the detection and tracking may be performed for each of the frames in a disparity frame sequence with any length, and the object tracking can be performed in the whole disparity frame sequence.

<Second Embodiment>

As described above, the center of the detected object is actually determined by calculating the outer frame of the detected object. Therefore, as described above with reference to FIG. 3(b), if the disparity map is incomplete and only a part of the object is detected, namely, the outer frame of the detected object is illustrated by the solid line rectangular frame in FIG. 3(b), the abscissa of the center of the determined object is $X_{object,N}$. However, in actuality, the real outer frame of the object in the Nth frame is illustrated by the dashed line frame in FIG. 3(b), and the real abscissa of the object should be $X'_{object,N}$. Thus, there is a large error for the center of the detected object since only a part of the object is detected; therefore the correction effect for the center is not good. For this situation, an improved object tracking method is provided in the present embodiment.

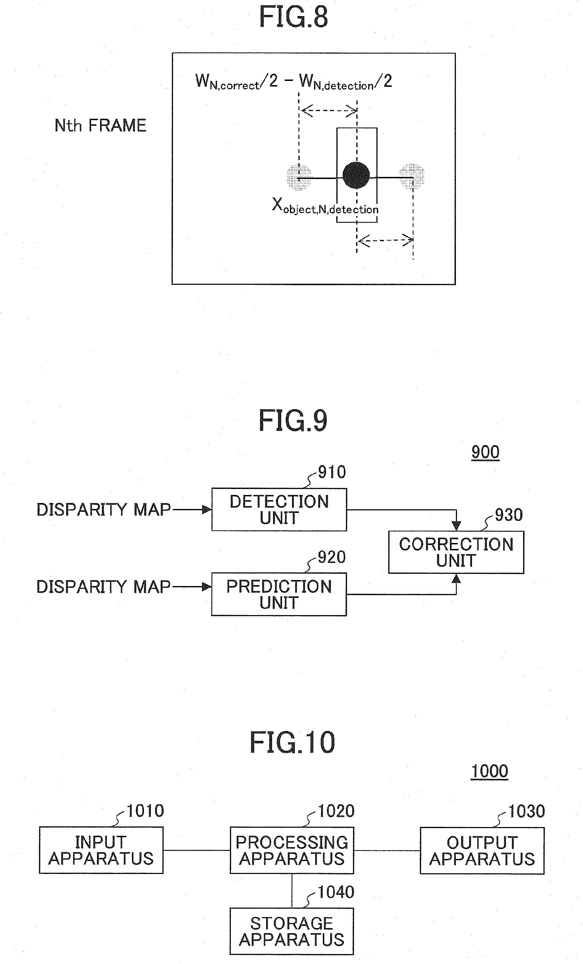

The object tracking method of the present embodiment is basically similar to the object tracking method of the first embodiment, and is different only in that a further processing of the center of a detected object is performed before the center of the object detected from the disparity map of the current frame is corrected in step S530. In the following, the method will be described with reference to FIG. 8.

According to the generation principle and experiment verification of the disparity map, if the disparity map is incomplete and only a part of the object is detected, the part should include a rightmost part of a right lateral edge of the object or a leftmost part of a left lateral edge of the object. Furthermore, in the real world, the width and height of the object are obviously changeless. According to the above conclusion, a center more accurate than the center of the detected object (hereinafter, it is called "derivation center") may be derived in cases where only a part of the object is detected. Specifically, a left derivation center (as illustrated by the left circle dot in FIG. 8) may be derived, if the detected part of the object is the rightmost part. The X-axis distance between the left derivation center and the center of the detected object (as illustrated by the circle dot in the solid frame) is $w_{N,correct}/2 - w_{N,detection}/2$, where $w_{N,correct}$ is the corrected width of the object in the current frame (the Nth frame) calculated in expression (1), and $w_{N,detection}$ is the width of the object detected from the current frame (the Nth frame). A right derivation center (as illustrated by the right circle dot in FIG. 8) may be derived, if the detected part of the object is the leftmost part. The X-axis distance between the right derivation center and the center of the detected object is also $w_{N,correct}/2 - w_{N,detection}/2$.

In the present embodiment, the left derivation center and the right derivation center are regarded as two candidate centers, because it cannot be determined directly whether the detected part of the object from the current frame is the leftmost part of the object or the rightmost part of the object. Next, a selection may be performed based on the distances between the two candidate centers and the predicted center of the object in the current frame, namely, the center closest to the predicted center of the object in the disparity map of the current frame in the X-axis direction may be selected from the two candidate centers, as the center of the object detected from the disparity map of the current frame. For example, as illustrated in FIG. 8, the left derivation center is closer to the predicted center of the object, therefore the left derivation center is selected as the center of the detected object. Thus, a more accurate result can be obtained by performing a further processing of the center of the object detected from the current frame. Accordingly, a better result can be obtained, by correcting the further processed center of the detected object in the disparity map of the current frame based on the confidence level of the disparity map of the previous frame in step S530.

As described above, only the X coordinate of the center of the detected object is further processed. It should be noted that, similar processing of the Y coordinate and Z coordinate may also be performed based on the actual detection result as needed, and the description thereof is omitted.

According to the object tracking method of the present embodiment of the present invention described above, an object tracking technology that can obtain a good tracking result in cases where the size of the tracked object is not known and the disparity map of the tracked object is incomplete, can be provided.

<Overall Configuration of Object Tracking Apparatus>

FIG. 9 is a functional configuration block diagram illustrating an object tracking apparatus 900 according to an embodiment of the present invention.

As illustrated in FIG. 9, the object tracking apparatus 900 may include a detection unit 910 configured to detect, from a disparity map of the current frame, the position of the object including the size of the object and the center of the object; a prediction unit 920 configured to predict the position of the object in the disparity map of the current frame based on the positions of the object detected from the disparity maps of a predetermined number of frames immediately before the current frame; and a correction unit 930 configured to correct the position of the object detected from the disparity map of the current frame to obtain a corrected position based on the confidence level of the size of the object detected from the disparity map of the previous frame, if the position of the object detected from the disparity map of the current frame matches with the predicted position of the object.

For the detailed functions and operations of the detection unit 910, the prediction unit 920 and the correction unit 930, one may refer to the description in FIGs. 5 to 8, and the description thereof is omitted here.

<System Hardware Configuration>

FIG. 10 is an overall hardware block diagram illustrating an object tracking system 1000 according to the embodiment of the present invention. As illustrated in FIG. 10, the object tracking system 1000 may include an input apparatus 1010 for inputting relevant images or information such as the disparity map sequence generated from left and right images picked up by a binocular camera or stereo video picked up by a stereoscopic camera, for example, including a keyboard, a mouse, a communication network and an input device connected thereto, etc.; a processing apparatus 1020 for implementing the object tracking method according to the embodiment of the present invention or being implemented as the object tracking apparatus according to the embodiment of the present invention, such as a CPU of a computer or other chips having processing ability, etc., that can be connected to a network (not shown) such as the Internet and obtain data such as left and right images via the network based on the requirements of processing procedures; an output apparatus 1030 for outputting the result obtained by implementing the object tracking method, such as the corrected center coordinates or the corrected object size to the outside, such as a screen, a printer, a communication network and a remote output device connected thereto, etc.; and a storage apparatus 1040 for storing data, such as the size and center of the object corrected in the historical frames, the size and center of the detected object and the confidence level of the size of the detected object, etc., by a volatile method or a nonvolatile method, such as various kinds of volatile or nonvolatile memory including a random-access memory (RAM), a read-only memory (ROM), a hard disk and a semiconductor memory.

The basic principle of the present invention is described above with reference to the embodiments. Any one or all of the steps or units of the method or apparatus according to the present invention may be implemented by hardware, software or a combination thereof in any one of computing devices (including a processor, a storage medium, etc.) or a network of computing devices. And it can be implemented by persons skilled in the art who have read the specification of the present application.

Therefore, the present invention can also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

In addition, in the apparatus or method of the present invention, units or steps may be divided and/or recombined. The division and/or recombination should be regarded as an equivalent embodiment of the present invention. Steps of the above method may be performed in time order, however the performed sequence is not limited to the time order. Any steps may be performed in parallel or independently.

The present invention is not limited to the specifically disclosed embodiments, and various modifications, combinations and replacements may be made without departing from the scope of the present invention.

The present application is based on and claims the benefit of priority of Chinese Priority Application No.201310364526.3 filed on August 20, 2013, the entire contents of which are hereby incorporated by reference.

**Claims**

1.  A method for tracking an object, the method comprising the steps of:

    detecting, from a disparity map of a current frame, a position of the object, the position being represented by a size of the object and a center of the object;
    predicting the position of the object in the disparity map of the current frame based on the positions of the object detected from the disparity maps of a predetermined number of frames immediately before the current frame; and
    if the object detected from the disparity map of the current frame exists within a region having a predetermined size and whose centre is the predicted centre of the object:

    correcting the size of the object detected from the disparity map of the current frame to obtain a corrected size based on a corrected size of the object in the disparity map of the previous frame and a confidence level of the size of the object detected from the disparity map of the previous frame and
    correcting the centre of the object detected from the disparity map of the current frame to obtain a corrected centre of the object based on the predicted centre of the object in the disparity map of the current frame and a confidence level of the size of the object detected from the disparity map of the previous frame; and

    whereby the confidence level is accumulated from frame to frame,
    wherein the size of the object includes the height of the object, the width of the object and a movement distance of the object in the depth direction between the adjacent frames, and
    **characterized in that** the confidence level of the size of the object detected from a frame is determined by setting the confidence level of the width, the confidence level of the height and the confidence level of the movement distance in the depth direction of the object detected from the disparity map of a first frame, calculating $Change\_w=|w_{k-1}-w_k|/w_{k-1}$, $Change\_h=|h_{k-1}-h_k|/h_{k-1}$, $Change\_d=|d_{k-1}-d_k|/d_{k-1}$ for the disparity map of a Kth frame, where $k>1$, $w_{k-1}$, $h_{k-1}$ and $d_{k-1}$ are the corrected width, the corrected height and the corrected movement distance in the depth direction of the object in the disparity map of a K-1th frame, respectively, and $w_k$, $h_k$ and $d_k$ are the width, the height and the movement distance in the depth direction of the object detected from the disparity map of the Kth frame, respectively,

determining the confidence level of the width of the object detected from the disparity map of the Kth frame, by increasing the confidence level of the width of the object detected from the disparity map of the K-1th frame by a predetermined manner if Change_w is less than a predetermined width threshold, or decreasing the confidence level of the width of the object detected from the disparity map of the K-1th frame by a predetermined manner if Change_w is greater than or equal to the predetermined width threshold,

determining the confidence level of the height of the object detected from the disparity map of the Kth frame, by increasing the confidence level of the height of the object detected from the disparity map of the K-1th frame by a predetermined manner if Change_h is less than a predetermined height threshold, or decreasing the confidence level of the height of the object detected from the disparity map of the K-1th frame by a predetermined manner if Change_h is greater than or equal to the predetermined height threshold, and

determining the confidence level of the movement distance of the object detected from the disparity map of the Kth frame, by increasing the confidence level of the movement distance of the object detected from the disparity map of the K-1th frame by a predetermined manner if Change_d is less than a predetermined distance threshold, or decreasing the confidence level of the movement distance of the object detected from the disparity map of the K-1th frame by a predetermined manner if Change_d is greater than or equal to the predetermined distance threshold.

2. The method for tracking an object according to claim 1,
wherein the step of correcting the size of the object detected from the disparity map of the current frame to obtain the corrected size includes:

weighting the corrected height of the object in the disparity map of the previous frame and the height of the object detected from the disparity map of the current frame, and setting the weighted height as the corrected height of the object in the disparity map of the current frame, the weight of the corrected height of the object in the disparity map of the previous frame being the confidence level of the height of the object detected from the disparity map of the previous frame;

weighting the corrected width of the object in the disparity map of the previous frame and the width of the object detected from the disparity map of the current frame, and setting the weighted width as the corrected width of the object in the disparity map of the current frame, the weight of the corrected width of the object in the disparity map of the previous frame being the confidence level of the width of the object detected from the disparity map of the previous frame; and

weighting the corrected movement distance of the object in the disparity map of the previous frame and the movement distance of the object detected from the disparity map of the current frame, and setting the weighted movement distance as the corrected movement distance of the object in the disparity map of the current frame, the weight of the corrected movement distance of the object in the disparity map of the previous frame being the confidence level of the movement distance of the object detected from the disparity map of the previous frame.

3. The method for tracking an object according to claim 1,
wherein the step of correcting the center of the object detected from the disparity map of the current frame to obtain the corrected center includes:

weighting an X-axis coordinate value of the predicted center of the object in the disparity map of the current frame and the X-axis coordinate value of the center of the object detected from the disparity map of the current frame, and setting the weighted X-axis coordinate value as the X-axis coordinate value of the corrected center of the object in the disparity map of the current frame, the weight of the X-axis coordinate value of the predicted center of the object in the disparity map of the current frame being the confidence level of the width of the object detected from the disparity map of the previous frame; and

weighting the movement distance in the depth direction of the predicted center of the object in the disparity map of the current frame and the movement distance in the depth direction of the center of the object detected from the disparity map of the current frame, and setting the weighted movement distance as the corrected movement distance of the object in the disparity map of the current frame, the weight of the movement distance of the predicted center of the object in the disparity map of the current frame being the confidence level of the movement distance of the object detected from the disparity map of the previous frame.

4. The method for tracking an object according to claim 3,

wherein the step of correcting the center of the object detected from the disparity map of the current frame to obtain the corrected center further includes

weighting a Y-axis coordinate value of the predicted center of the object in the disparity map of the current frame and the Y-axis coordinate value of the center of the object detected from the disparity map of the current frame, and setting the weighted Y-axis coordinate value as the Y-axis coordinate value of the corrected center of the object in the disparity map of the current frame, the weight of the Y-axis coordinate value of the predicted center of the object in the disparity map of the current frame being the confidence level of the height of the object detected from the disparity map of the previous frame.

5. The method for tracking an object according to claim 2,

wherein the step of correcting the center of the object detected from the disparity map of the current frame to obtain the corrected center further includes

determining two candidate centers of the object in the disparity map of the current frame, based on the corrected width of the object in the disparity map of the current frame and the position of the object detected from the disparity map of the current frame;

selecting the center closest to the predicted center of the object in the disparity map of the current frame in an X-axis direction from the two candidate centers; and

setting the selected center as the center of the object detected from the disparity map of the current frame.

6. An apparatus for tracking an object, the apparatus comprising:

a detection unit configured to detect, from a disparity map of a current frame, a position of the object including a size of the object and a center of the object;

a prediction unit configured to predict the position of the object in the disparity map of the current frame based on the positions of the object detected from the disparity maps of a predetermined number of frames immediately before the current frame; and

a correction unit;

wherein, in the event that the object detected from the disparity map of the current frame exists within a region having a predetermined size and whose centre is the centre of the object, the correction unit is configured to:

correct the size of the object detected from the disparity map of the current frame to obtain a corrected size based on a corrected size of the object in the disparity map of the previous frame and a confidence level of the size of the object detected from the disparity map of the previous frame; and

correct the centre of the object detected from the disparity map of the current frame to obtain a corrected centre of the object based on the predicted centre of the object in the disparity map of the current frame and a confidence level of the size of the object detected from the disparity map of the previous frame;

whereby the confidence level is accumulated from frame to frame, wherein the size of the object includes the height of the object, the width of the object and a movement distance of the object in the depth direction between the adjacent frames, and

**characterized in that** the confidence level of the size of the object detected from a frame is determined by setting the confidence level of the width, the confidence level of the height and the confidence level of the movement distance in the depth direction of the object detected from the disparity map of a first frame, calculating $Change\_w=|w_{k-1}-w_k|/w_{k-1}$, $Change\_h=|h_{k-1}-h_k|/h_{k-1}$, $Change\_d=|d_{k-1}-d_k|/d_{k-1}$ for the disparity map of a Kth frame, where k>l, $w_{k-1}$, $h_{k-1}$ and $d_{k-1}$ are the corrected width, the corrected height and the corrected movement distance in the depth direction of the object in the disparity map of a K-1th frame, respectively, and $w_k$, $h_k$ and $d_k$ are the width, the height and the movement distance in the depth direction of the object detected from the disparity map of the Kth frame, respectively,

determining the confidence level of the width of the object detected from the disparity map of the Kth frame, by increasing the confidence level of the width of the object detected from the disparity map of the K-1th frame by a predetermined manner if Change_w is less than a predetermined width threshold, or decreasing the confidence level of the width of the object detected from the disparity map of the K-1th frame by a predetermined manner if Change_w is greater than or equal to the predetermined width threshold,

determining the confidence level of the height of the object detected from the disparity map of the Kth frame, by increasing the confidence level of the height of the object detected from the disparity map of the K-1th frame by a predetermined manner if Change_h is less than a predetermined height threshold, or decreasing the confidence level of the height of the object detected from the disparity map of the K-1th frame by a predetermined manner if Change_h is greater than or equal to the predetermined height threshold, and
determining the confidence level of the movement distance of the object detected from the disparity map of the Kth frame, by increasing the confidence level of the movement distance of the object detected from the disparity map of the K-1th frame by a predetermined manner if Change_d is less than a predetermined distance threshold, or decreasing the confidence level of the movement distance of the object detected from the disparity map of the K-1th frame by a predetermined manner if Change_d is greater than or equal to the predetermined distance threshold.

**Patentansprüche**

1. Verfahren zum Verfolgen eines Objekts, wobei das Verfahren die folgenden Schritte umfasst:

Erfassen, aus einer Disparitätskarte eines aktuellen Bildes, einer Position des Objekts, wobei die Position durch eine Größe des Objekts und einem Zentrum des Objekts dargestellt wird;
Vorhersagen der Position des Objekts in der Disparitätskarte des aktuellen Bildes basierend auf den Positionen des Objekts, das aus den Disparitätskarten einer vorbestimmten Anzahl von Bildern unmittelbar vor dem aktuellen Bild erfasst wurde; und
wenn das aus der Disparitätskarte des aktuellen Bildes erfasste Objekt innerhalb einer Region mit einer vorbestimmten Größe existiert und deren Zentrum das vorhergesagte Zentrum des Objekts ist:

Korrigieren der Größe des aus der Disparitätskarte des aktuellen Bildes erfassten Objekts, um eine korrigierte Größe basierend auf einer korrigierten Größe des Objekts in der Disparitätskarte des vorhergehenden Bildes und einem Vertrauensniveau der Größe des aus der Disparitätskarte des vorhergehenden Bildes erfassten Objekts, zu erlangen, und
Korrigieren des Zentrums des aus der Disparitätskarte des aktuellen Bildes erfassten Objekts, um ein korrigiertes Zentrum des Objekts basierend auf dem vorhergesagten Zentrum des Objekts in der Disparitätskarte des aktuellen Bildes und einem Vertrauensniveau der Größe des aus der Disparitätskarte des vorhergehenden Bildes erfassten Objekts zu erlangen; und

wodurch das Vertrauensniveau von Bild zu Bild akkumuliert wird;
wobei die Größe des Objekts die Höhe des Objekts, die Breite des Objekts und eine Bewegungsstrecke des Objekts in der Tiefenrichtung zwischen den benachbarten Bildern einschließt, und
**dadurch gekennzeichnet, dass**:
das Vertrauensniveau der Größe des aus einem Bild erfassten Objekts bestimmt wird durch:

Einstellen des Vertrauensniveaus der Breite, des Vertrauensniveaus der Höhe und des Vertrauensniveaus der Bewegungsstrecke in der Tiefenrichtung des aus der Disparitätskarte eines ersten Bildes erfassten Objekts,
Berechnen von Change_w = $| w_{k-1} - w_k | / w_{k-1}$, Change_h = $| h_{k-1} - h_k | / h_{k-1}$, Change_d = $| d_{k-1} - d_k | / d_{k-1}$ für die Disparitätskarte eines K-ten Bildes, wobei k > 1, $w_{k-1}$, $h_{k-1}$ und $d_{k-1}$ jeweils die korrigierten Breite, die korrigierte Höhe und die korrigierte Bewegungsstrecke in der Tiefenrichtung des Objekts in der Disparitätskarte eines K-1-ten Bildes sind und $w_k$, $h_k$ and $d_k$ jeweils die Breite, die Höhe und die Bewegungsstrecke in der Tiefenrichtung des aus der Disparitätskarte des K-ten Bildes erfassten Objekts sind,
Bestimmen des Vertrauensniveaus der Breite des aus der Disparitätskarte des K-ten Bildes erfassten Objekts durch Erhöhen des Vertrauensniveaus der Breite des aus der Disparitätskarte des K-1-ten Bildes erfassten Objekts auf eine vorbestimmte Weise, wenn Change_w kleiner als ein vorbestimmter Breitenschwellenwert ist, oder Verringern des Vertrauensniveaus der Breite des aus der Disparitätskarte der K-1-ten Bildes erfassten Objekts auf eine vorbestimmte Weise, wenn Change_w größer als oder gleich dem vorbestimmten Breitenschwellenwert ist,
Bestimmen des Vertrauensniveaus der Höhe des aus der Disparitätskarte des K-ten Bildes erfassten Objekts durch Erhöhen des Vertrauensniveaus der Höhe des aus der Disparitätskarte des K-1-ten Bildes erfassten Objekts auf eine vorbestimmte Weise, wenn Change_h kleiner als ein vorbestimmter Höhenschwellenwert ist, oder Verringern des Vertrauensniveaus der Höhe des aus der Disparitätskarte der K-1-ten Bildes erfassten Objekts auf eine vorbestimmte Weise, wenn Change_h größer als oder gleich dem vorbestimmten Höhenschwellenwert ist, und
Bestimmen des Vertrauensniveaus der Bewegungsstrecke des aus der Disparitätskarte des K-ten Bildes erfassten Objekts durch Erhöhen des Vertrauensniveaus der Bewegungsstrecke des aus der Disparitätskarte des K-1-ten Bildes erfassten Objekts auf eine vorbestimmte Weise, wenn Change_d kleiner als ein vorbestimmter Streckenschwellenwert ist, oder Verringern des Vertrauensbereichs der Bewegungsstrecke des aus der Disparitätskarte der K-1-ten Bildes erfassten Objekts auf eine vorbestimmte Weise, wenn Change_d größer als oder gleich dem vorbestimmten Streckenschwellenwert ist.

2. Verfahren zum Verfolgen eines Objekts nach Anspruch 1,
wobei der Schritt des Korrigierens der Größe des aus der Disparitätskarte des aktuellen Bildes erfassten Objekts, um die korrigierte Größe zu erlangen, einschließt:

Gewichten der korrigierten Höhe des Objekts in der Disparitätskarte des vorhergehenden Bildes und der Höhe des aus der Disparitätskarte des aktuellen Bildes erfassten Objekts, und Einstellen der gewichteten Höhe als die korrigierte Höhe des Objekts in der Disparitätskarte des aktuellen Bildes, wobei die Gewichtung der korrigierten Höhe des Objekts in der Disparitätskarte des vorhergehenden Bildes das Vertrauensniveau der Höhe des aus der Disparitätskarte des vorhergehenden Bildes erfassten Objekts ist;
Gewichten der korrigierten Breite des Objekts in der Disparitätskarte des vorhergehenden Bildes und der Breite des aus der Disparitätskarte des aktuellen Bildes erfassten Objekts, und Einstellen der gewichteten Breite als die korrigierte Breite des Objekts in der Disparitätskarte des aktuellen Bildes, wobei die Gewichtung der korrigierten Breite des Objekts in der Disparitätskarte des vorhergehenden Bildes das Vertrauensniveau der Breite des aus der Disparitätskarte des vorhergehenden Bildes erfassten Objekts ist; und
Gewichten der korrigierten Bewegungsstrecke des Objekts in der Disparitätskarte des vorhergehenden Bildes und der Bewegungsstrecke des aus der Disparitätskarte des aktuellen Bildes erfassten Objekts, und Einstellen der gewichteten Bewegungsstrecke als die korrigierte Bewegungsstrecke des Objekts in der Disparitätskarte des aktuellen Bildes, wobei die Gewichtung der korrigierten Bewegungsstrecke des Objekts in der Disparitätskarte des vorhergehenden Bildes das Vertrauensniveau der Bewegungsstrecke des aus der Disparitätskarte des vorhergehenden Bildes erfassten Objekts ist.

3. Verfahren zum Verfolgen eines Objekts nach Anspruch 1,
wobei der Schritt des Korrigierens des Zentrums des aus der Disparitätskarte des aktuellen Bildes erfassten Objekts, um das korrigierte Zentrum zu erlangen, einschließt:

Gewichten eines X-Achsen-Koordinatenwertes des vorhergesagten Zentrums des Objekts in der Disparitätskarte des aktuellen Bildes und des X-Achsen-Koordinatenwertes des aus der Disparitätskarte des aktuellen Bildes erfassten Zentrums des Objekts, und Einstellen des gewichteten X-Achsen-Koordinatenwertes als den X-Achsen-Koordinatenwert des korrigierten Zentrums des Objekts in der Disparitätskarte des aktuellen Bildes, wobei die Gewichtung des X-Achsen-Koordinatenwertes des vorhergesagten Zentrums des Objekts in der Disparitätskarte des aktuellen Bildes das Vertrauensniveau der Breite des aus der Disparitätskarte des vorhergehenden Bildes erfassten Objekts ist; und
Gewichten der Bewegungsstrecke in der Tiefenrichtung des vorhergesagten Zentrums des Objekts in der Disparitätskarte des aktuellen Bildes und der Bewegungsstrecke in der Tiefenrichtung des Zentrums des aus der Disparitätskarte des aktuellen Bildes erfassten Objekts, und Einstellen der gewichteten Bewegungsstrecke als die korrigierte Bewegungsstrecke des Objekts in der Disparitätskarte des aktuellen Bildes, wobei die Gewichtung der Bewegungsstrecke des vorhergesagten Zentrums des Objekts in der Disparitätskarte des aktuellen Bildes das Vertrauensniveau der Bewegungsstrecke des aus der Disparitätskarte des vorhergehenden Bildes erfassten Objekts ist.

4. Verfahren zum Verfolgen eines Objekts nach Anspruch 3,
wobei der Schritt des Korrigierens des Zentrums des aus der Disparitätskarte des aktuellen Bildes erfassten Objekts, um das korrigierte Zentrum zu erlangen, einschließt:
Gewichten eines Y-Achsen-Koordinatenwertes des vorhergesagten Zentrums des Objekts in der Disparitätskarte des aktuellen Bildes und des Y-Achsen-Koordinatenwertes des Zentrums des aus der Disparitätskarte des aktuellen Bildes erfassten Objekts, und Einstellen des gewichteten Y-Achsen-Koordinatenwertes als den Y-Achsen-Koordinatenwert des korrigierten Zentrums des Objekts in der Disparitätskarte des aktuellen Bildes, wobei die Gewichtung des Y-Achsen-Koordinatenwertes des vorhergesagten Zentrums des Objekts in der Disparitätskarte des aktuellen Bildes das Vertrauensniveau der Höhe des aus der Disparitätskarte des vorhergehenden Bildes erfassten Objekts ist.

5. Verfahren zum Verfolgen eines Objekts nach Anspruch 2,
wobei der Schritt des Korrigierens des Zentrums des aus der Disparitätskarte des aktuellen Bildes erfassten Objekts, um das korrigierte Zentrum zu erlangen, einschließt:

Bestimmen von zwei Kandidatenzentren des Objekts in der Disparitätskarte des aktuellen Bildes basierend auf der korrigierten Breite des Objekts in der Disparitätskarte des aktuellen Bildes und der Position des aus der Disparitätskarte des aktuellen Bildes erfassten Objekts;

Auswählen des Zentrums, das sich am nächsten zum vorhergesagten Zentrum des Objekts in die Disparitätskarte des aktuellen Bildes in einer X-Achsen-Richtung befindet, aus den zwei Kandidatenzentren; und

Einstellen des ausgewählten Zentrums als das Zentrum des aus der Disparitätskarte des aktuellen Bildes erfassten Objekts.

6. Einrichtung zum Verfolgen eines Objekts, wobei die Einrichtung umfasst:

eine Erfassungseinheit, die konfiguriert ist, aus einer Disparitätskarte eines aktuellen Bildes eine Position des Objekts einschließlich einer Größe des Objektes und eines Zentrums des Objekts zu erfassen;

eine Vorhersageeinheit, die konfiguriert ist, die Position des Objekts in der Disparitätskarte des aktuellen Rahmens basierend auf den Positionen des Objekts vorherzusagen, die aus den Disparitätskarten einer vorbestimmten Anzahl von Bildern unmittelbar vor dem aktuellen Rahmen erfasst wurden, und

einer Korrektureinheit;

wobei im Fall, dass das aus der Disparitätskarte des aktuellen Bildes erfasste Objekt innerhalb einer Region mit einer vorbestimmten Größe existiert und deren Zentrum das Zentrum des Objekts ist, die Korrektureinheit konfiguriert ist zum:

Korrigieren der Größe des aus der Disparitätskarte des aktuellen Bildes erfassten Objekts, um eine korrigierte Größe basierend auf einer korrigierten Größe des Objekts in der Disparitätskarte des vorhergehenden Bildes und einem Vertrauensniveau der Größe des aus der Disparitätskarte des vorhergehenden Bildes erfassten Objekts zu erlangen; und

Korrigieren des Zentrums des aus der Disparitätskarte des aktuellen Bildes erfassten Objekts, um ein korrigiertes Zentrum des Objekts basierend auf dem vorhergesagten Zentrum des Objekts in der Disparitätskarte des aktuellen Bildes und einem Vertrauensniveau der Größe des aus der Disparitätskarte des vorhergehenden Bildes erfassten Objekts zu erlangen;

wodurch das Vertrauensniveau von Bild zu Bild akkumuliert wird;

wobei die Größe des Objekts die Höhe des Objekts, die Breite des Objekts und eine Bewegungsstrecke des Objekts in der Tiefenrichtung zwischen den benachbarten Bildern einschließt, und

**dadurch gekennzeichnet, dass**:

das Vertrauensniveau der Größe des aus einem Bild erfassten Objekts bestimmt wird durch:

Einstellen des Vertrauensniveaus der Breite, des Vertrauensniveaus der Höhe und des Vertrauensniveaus der Bewegungsstrecke in der Tiefenrichtung des aus der Disparitätskarte des ersten Bildes erfassten Objekts,

Berechnen von $Change\_w = | w_{k-1} - w_k | / w_{k-1}$, $Change\_h = | h_{k-1} - h_k | / h_{k-1}$, $Change\_d = | d_{k-1} - d_k | / d_{k-1}$ für die Disparitätskarte eines K-ten Bildes, wobei $k > 1$, $w_{k-1}$, $h_{k-1}$ und $d_{k-1}$ jeweils die korrigierten Breite, die korrigierte Höhe und die korrigierte Bewegungsstrecke in der Tiefenrichtung des Objekts in der Disparitätskarte eines K-1-ten Bildes sind und $w_k$, $h_k$ and $d_k$ jeweils die Breite, die Höhe und die Bewegungsstrecke in der Tiefenrichtung des aus der Disparitätskarte des K-ten Bildes erfassten Objekts sind,

Bestimmen des Vertrauensniveaus der Breite des aus der Disparitätskarte des K-ten Bildes erfassten Objekts durch Erhöhen des Vertrauensniveaus der Breite des aus der Disparitätskarte des K-1-ten Bildes erfassten Objekts auf eine vorbestimmte Weise, wenn $Change\_w$ kleiner als ein vorbestimmter Breitenschwellenwert ist, oder Verringern des Vertrauensbereichs der Breite des aus der Disparitätskarte der K-1-ten Bildes erfassten Objekts auf eine vorbestimmte Weise, wenn $Change\_w$ größer als oder gleich dem vorbestimmten Breitenschwellenwert ist,

Bestimmen des Vertrauensniveaus der Höhe des aus der Disparitätskarte des K-ten Bildes erfassten Objekts durch Erhöhen des Vertrauensniveaus der Höhe des aus der Disparitätskarte des K-1-ten Bildes erfassten Objekts auf eine vorbestimmte Weise, wenn $Change\_h$ kleiner als ein vorbestimmter Höhenschwellenwert ist, oder Verringern des Vertrauensniveaus der Höhe des aus der Disparitätskarte der K-1-ten Bildes erfassten Objekts auf eine vorbestimmte Weise, wenn $Change\_h$ größer als oder gleich dem vorbestimmten Höhenschwellenwert ist, und

Bestimmen des Vertrauensniveaus der Bewegungsstrecke des aus der Disparitätskarte des K-ten Bildes erfassten Objekts durch Erhöhen des Vertrauensniveaus der Bewegungsstrecke des aus der Disparitätskarte des K-1-ten Bildes erfassten Objekts auf eine vorbestimmte Weise, wenn $Change\_d$

kleiner als ein vorbestimmter Streckenschwellenwert ist, oder Verringern des Vertrauensbereichs der Bewegungsstrecke des aus der Disparitätskarte der K-1-ten Bildes erfassten Objekts auf eine vorbestimmte Weise, wenn Change_d größer als oder gleich dem vorbestimmten Streckenschwellenwert ist.

## Revendications

**1.** Procédé de suivi d'un objet, le procédé comprenant les étapes ci-dessous consistant à :

détecter, à partir d'une carte de disparité d'une trame en cours, une position de l'objet, la position étant représentée par une taille de l'objet et un centre de l'objet ;
prédire la position de l'objet dans la carte de disparité de la trame en cours, sur la base des positions de l'objet détecté à partir des cartes de disparité d'un nombre prédéterminé de trames qui précédent immédiatement la trame en cours ; et
si l'objet détecté à partir de la carte de disparité de la trame en cours existe au sein d'une zone présentant une taille prédéterminée et dont le centre est le centre prédit de l'objet :

corriger la taille de l'objet détecté à partir de la carte de disparité de la trame en cours en vue d'obtenir une taille corrigée, sur la base d'une taille corrigée de l'objet dans la carte de disparité de la trame précédente et d'un niveau de confiance de la taille de l'objet détecté à partir de la carte de disparité de la trame précédente ; et
corriger le centre de l'objet détecté à partir de la carte de disparité de la trame en cours en vue d'obtenir un centre corrigé de l'objet sur la base du centre prédit de l'objet dans la carte de disparité de la trame en cours et d'un niveau de confiance de la taille de l'objet détecté à partir de la carte de disparité de la trame précédente ; et

moyennant quoi le niveau de confiance est accumulé de trame en trame ;
dans lequel la taille de l'objet inclut la hauteur de l'objet, la largeur de l'objet et une distance de déplacement de l'objet dans la direction de profondeur entre les trames adjacentes ; et
**caractérisé en ce que** :
le niveau de confiance de la taille de l'objet détecté à partir d'une trame est déterminé par les étapes consistant à :

définir le niveau de confiance de la largeur, le niveau de confiance de la hauteur et le niveau de confiance de la distance de déplacement dans la direction de profondeur de l'objet détecté à partir de la carte de disparité d'une première trame ;
calculer $Change\_w = |\,w_{k-1} - w_k\,|\,/\,w_{k-1}$, $Change\_h = |\,h_{k-1} - h_k\,|\,/\,h_{k-1}$, $Change\_d = |\,d_{k-1} - d_k\,|\,/\,d_{k-1}$ pour la carte de disparité d'une Kième trame, où $k > 1$, «$w_{k-1}$», «$h_{k-1}$» et «$d_{k-1}$» correspondent à la largeur corrigée, la hauteur corrigée et la distance de déplacement corrigée dans la direction de profondeur de l'objet dans la carte de disparité d'une K-1ième trame, respectivement, et «$w_k$», «$h_k$» et «$d_k$» correspondent à la largeur, la hauteur et la distance de déplacement dans la direction de profondeur de l'objet détecté à partir de la carte de disparité de la Kième trame, respectivement ;
déterminer le niveau de confiance de la largeur de l'objet détecté à partir de la carte de disparité de la Kième trame, en augmentant le niveau de confiance de la largeur de l'objet détecté à partir de la carte de disparité de la K-1ième trame d'une manière prédéterminée si « Change_w » est inférieur à un seuil de largeur prédéterminé, ou en diminuant le niveau de confiance de la largeur de l'objet détecté à partir de la carte de disparité de la K-1ième trame d'une manière prédéterminée si « Change_w » est supérieur ou égal au seuil de largeur prédéterminé ;
déterminer le niveau de confiance de la hauteur de l'objet détecté à partir de la carte de disparité de la Kième trame, en augmentant le niveau de confiance de la hauteur de l'objet détecté à partir de la carte de disparité de la K-1ième trame d'une manière prédéterminée si « Change_h » est inférieur à un seuil de hauteur prédéterminé, ou en diminuant le niveau de confiance de la hauteur de l'objet détecté à partir de la carte de disparité de la K-1ième trame d'une manière prédéterminée si « Change_h » est supérieur ou égal au seuil de hauteur prédéterminé ; et
déterminer le niveau de confiance de la distance de déplacement de l'objet détecté à partir de la carte de disparité de la Kième trame, en augmentant le niveau de confiance de la distance de déplacement de l'objet détecté à partir de la carte de disparité de la K-1ième trame d'une manière prédéterminée si « Change_d » est inférieur à un seuil de distance prédéterminé, ou en diminuant le niveau de confiance de la distance de déplacement de l'objet détecté à partir de la carte de disparité de la K-1ième trame d'une manière prédéterminée si « Change_d » est supérieur ou égal au seuil de distance prédéterminé.

2. Procédé de suivi d'un objet selon la revendication 1,
dans lequel l'étape de correction de la taille de l'objet détecté à partir de la carte de disparité de la trame en cours en vue d'obtenir la taille corrigée inclut les étapes consistant à :

pondérer la hauteur corrigée de l'objet dans la carte de disparité de la trame précédente et la hauteur de l'objet détecté à partir de la carte de disparité de la trame en cours, et définir la hauteur pondérée en tant que la hauteur corrigée de l'objet dans la carte de disparité de la trame en cours, le poids de la hauteur corrigée de l'objet dans la carte de disparité de la trame précédente étant le niveau de confiance de la hauteur de l'objet détecté à partir de la carte de disparité de la trame précédente ;
pondérer la largeur corrigée de l'objet dans la carte de disparité de la trame précédente et la largeur de l'objet détecté à partir de la carte de disparité de la trame en cours, et définir la largeur pondérée en tant que la largeur corrigée de l'objet dans la carte de disparité de la trame en cours, le poids de la largeur corrigée de l'objet dans la carte de disparité de la trame précédente étant le niveau de confiance de la largeur de l'objet détecté à partir de la carte de disparité de la trame précédente ; et
pondérer la distance de déplacement corrigée de l'objet dans la carte de disparité de la trame précédente et la distance de déplacement de l'objet détecté à partir de la carte de disparité de la trame en cours, et définir la distance de déplacement pondérée en tant que la distance de déplacement corrigée de l'objet dans la carte de disparité de la trame en cours, le poids de la distance de déplacement corrigée de l'objet dans la carte de disparité de la trame précédente étant le niveau de confiance de la distance de déplacement de l'objet détecté à partir de la carte de disparité de la trame précédente.

3. Procédé de suivi d'un objet selon la revendication 1,
dans lequel l'étape de correction du centre de l'objet détecté à partir de la carte de disparité de la trame en cours en vue d'obtenir le centre corrigé inclut les étapes consistant à :

pondérer une valeur de coordonnées d'axe des X du centre prédit de l'objet dans la carte de disparité de la trame en cours et la valeur de coordonnées d'axe des X du centre de l'objet détecté à partir de la carte de disparité de la trame en cours, et définir la valeur de coordonnées d'axe des X pondérée en tant que la valeur de coordonnées d'axe des X du centre corrigé de l'objet dans la carte de disparité de la trame en cours, le poids de la valeur de coordonnées d'axe des X du centre prédit de l'objet dans la carte de disparité de la trame en cours étant le niveau de confiance de la largeur de l'objet détecté à partir de la carte de disparité de la trame précédente ; et
pondérer la distance de déplacement dans la direction de profondeur du centre prédit de l'objet dans la carte de disparité de la trame en cours et la distance de déplacement dans la direction de profondeur du centre de l'objet détecté à partir de la carte de disparité de la trame en cours, et définir la distance de déplacement pondérée en tant que la distance de déplacement corrigée de l'objet dans la carte de disparité de la trame en cours, le poids de la distance de déplacement du centre prédit de l'objet dans la carte de disparité de la trame en cours étant le niveau de confiance de la distance de déplacement de l'objet détecté à partir de la carte de disparité de la trame précédente.

4. Procédé de suivi d'un objet selon la revendication 3,
dans lequel l'étape de correction du centre de l'objet détecté à partir de la carte de disparité de la trame en cours en vue d'obtenir le centre corrigé inclut en outre les étapes consistant à :
pondérer une valeur de coordonnées d'axe des Y du centre prédit de l'objet dans la carte de disparité de la trame en cours et la valeur de coordonnées d'axe des Y du centre de l'objet détecté à partir de la carte de disparité de la trame en cours, et définir la valeur de coordonnées d'axe des Y pondérée en tant que la valeur de coordonnées d'axe des Y du centre corrigé de l'objet dans la carte de disparité de la trame en cours, le poids de la valeur de coordonnées d'axe des Y du centre prédit de l'objet dans la carte de disparité de la trame en cours étant le niveau de confiance de la hauteur de l'objet détecté à partir de la carte de disparité de la trame précédente.

5. Procédé de suivi d'un objet selon la revendication 2,
dans lequel l'étape de correction du centre de l'objet détecté à partir de la carte de disparité de la trame en cours, en vue d'obtenir le centre corrigé, inclut en outre les étapes consistant à :

déterminer deux centres candidats de l'objet dans la carte de disparité de la trame en cours, sur la base de la largeur corrigée de l'objet dans la carte de disparité de la trame en cours et de la position de l'objet détecté à partir de la carte de disparité de la trame en cours ;

sélectionner le centre le plus proche du centre prédit de l'objet dans la carte de disparité de la trame en cours dans une direction d'axe des X parmi les deux centres candidats ; et

définir le centre sélectionné en tant que le centre de l'objet détecté à partir de la carte de disparité de la trame en cours.

6. Appareil destiné à suivre un objet, l'appareil comprenant :

une unité de détection configurée de manière à détecter, à partir d'une carte de disparité d'une trame en cours, une position de l'objet incluant une taille de l'objet et un centre de l'objet ;

une unité de prédiction configurée de manière à prédire la position de l'objet dans la carte de disparité de la trame en cours sur la base des positions de l'objet détecté à partir des cartes de disparité d'un nombre prédéterminé de trames qui précèdent immédiatement la trame en cours ; et

une unité de correction ;

dans lequel, dans le cas où l'objet détecté à partir de la carte de disparité de la trame en cours existe au sein d'une zone présentant une taille prédéterminée et dont le centre est le centre de l'objet, l'unité de correction est configurée de manière à :

corriger la taille de l'objet détecté à partir de la carte de disparité de la trame en cours en vue d'obtenir une taille corrigée, sur la base d'une taille corrigée de l'objet dans la carte de disparité de la trame précédente et d'un niveau de confiance de la taille de l'objet détecté à partir de la carte de disparité de la trame précédente ; et

corriger le centre de l'objet détecté à partir de la carte de disparité de la trame en cours en vue d'obtenir un centre corrigé de l'objet sur la base du centre prédit de l'objet dans la carte de disparité de la trame en cours et d'un niveau de confiance de la taille de l'objet détecté à partir de la carte de disparité de la trame précédente ;

moyennant quoi le niveau de confiance est accumulé de trame en trame ;

dans lequel la taille de l'objet inclut la hauteur de l'objet, la largeur de l'objet et une distance de déplacement de l'objet dans la direction de profondeur entre les trames adjacentes ; et

**caractérisé en ce que** :

le niveau de confiance de la taille de l'objet détecté à partir d'une trame est déterminé par les étapes consistant à :

définir le niveau de confiance de la largeur, le niveau de confiance de la hauteur et le niveau de confiance de la distance de déplacement dans la direction de profondeur de l'objet détecté à partir de la carte de disparité d'une première trame ;

calculer Change_w = | $w_{k-1}$ - $w_k$ | / $w_{k-1}$, Change_h = | $h_{k-1}$ - $h_k$ | / $h_{k-1}$, Change_d = | $d_{k-1}$ - $d_k$ | / $d_{k-1}$ pour la carte de disparité d'une Kième trame, où k > 1, « $w_{k-1}$ », « $h_{k-1}$ » et « $d_{k-1}$ » correspondent à la largeur corrigée, la hauteur corrigée et la distance de déplacement corrigée dans la direction de profondeur de l'objet dans la carte de disparité d'une K-lième trame, respectivement, et « $w_k$ », « $h_k$ » et « $d_k$ » correspondent à la largeur, la hauteur et la distance de déplacement dans la direction de profondeur de l'objet détecté à partir de la carte de disparité de la Kième trame, respectivement ;

déterminer le niveau de confiance de la largeur de l'objet détecté à partir de la carte de disparité de la Kième trame, en augmentant le niveau de confiance de la largeur de l'objet détecté à partir de la carte de disparité de la K-lième trame d'une manière prédéterminée si « Change_w » est inférieur à un seuil de largeur prédéterminé, ou en diminuant le niveau de confiance de la largeur de l'objet détecté à partir de la carte de disparité de la K-lième trame d'une manière prédéterminée si « Change_w » est supérieur ou égal au seuil de largeur prédéterminé ;

déterminer le niveau de confiance de la hauteur de l'objet détecté à partir de la carte de disparité de la Kième trame, en augmentant le niveau de confiance de la hauteur de l'objet détecté à partir de la carte de disparité de la K-lième trame d'une manière prédéterminée si « Change_h » est inférieur à un seuil de hauteur prédéterminé, ou en diminuant le niveau de confiance de la hauteur de l'objet détecté à partir de la carte de disparité de la K-lième trame d'une manière prédéterminée si « Change_h » est supérieur ou égal au seuil de hauteur prédéterminé ; et

déterminer le niveau de confiance de la distance de déplacement de l'objet détecté à partir de la carte de disparité de la Kième trame, en augmentant le niveau de confiance de la distance de déplacement de l'objet détecté à partir de la carte de disparité de la K-lième trame d'une manière prédéterminée si « Change_d » est inférieur à un seuil de distance prédéterminé, ou en diminuant le niveau de confiance de la distance de déplacement de l'objet détecté à partir de la carte de disparité de la K-lième trame d'une manière prédéterminée si « Change_d » est supérieur ou égal au seuil de distance prédéterminé.

## FIG.1

## FIG.2

# FIG.3(a)

N-1th FRAME

$X_{object,N-1}$

# FIG.3(b)

Nth FRAME

DETECTED POSITION
OF OBJECT

$X'_{object,N}$

$X_{object,N}$

REAL POSITION
OF OBJECT

# FIG.3(c)

N+1th FRAME

PREDICTED POSITION
OF OBJECT

$X_{object,N+1}$

$X_{object,N+1,P}$

DETECTED
POSITION
OF OBJECT

# FIG.4

# FIG.5

START

S510
DETECTING POSITION OF OBJECT INCLUDING SIZE
OF OBJECT AND CENTER OF OBJECT
FROM DISPARITY MAP OF CURRENT FRAME

S520
PREDICTING POSITION OF OBJECT IN DISPARITY
MAP OF CURRENT FRAME BASED ON POSITIONS
OF OBJECT DETECTED FROM DISPARITY MAPS
OF A PREDETERMINED NUMBER OF FRAMES
IMMEDIATELY BEFORE CURRENT FRAME

S530
CORRECTING SIZE AND CENTER OF OBJECT DETECTED
FROM DISPARITY MAP OF CURRENT FRAME BASED ON
CONFIDENCE LEVEL OF SIZE OF OBJECT DETECTED
FROM DISPARITY MAP OF PREVIOUS FRAME

END

FIG.6(a)

N-2th FRAME

$X_{object, N-2}$

DETECTED POSITION
OF OBJECT

FIG.6(b)

N-1th FRAME

$X_{object, N-1}$

DETECTED POSITION
OF OBJECT

FIG.6(c)

Nth FRAME

$X_{object,N,p}$

PREDICTED POSITION
OF OBJECT

FIG.6(d)

Nth FRAME

$X_{object,N}$

DETECTED POSITION
OF OBJECT

# FIG.7

```
( START )
```

S701 — **DISPARITY MAP OF THE FIRST FRAME?**

YES → S702 **SETTING CONFIDENCE LEVEL OF WIDTH, HEIGHT AND MOVEMENT DISTANCE OF THE DETECTED OBJECT AS CONSTANT VALUES**

NO ↓

S703 — **CALCULATING**
$$Change\_w = |w_{k-1} - w_k| / w_{k-1},$$
$$Change\_h = |h_{k-1} - h_k| / h_{k-1},$$
$$Change\_d = |d_{k-1} - d_k| / d_{k-1}$$

S704 — **IS Change_w LESS THAN MAX_W_CHANGE ?**

NO ← → YES

S706 — **DECREASING CONFIDENCE LEVEL OF WIDTH OF OBJECT DETECTED FROM DISPARITY MAP OF K-1th FRAME $C_{w,k-1}$ TO OBTAIN CONFIDENCE LEVEL OF WIDTH OF OBJECT DETECTED FROM DISPARITY MAP OF Kth FRAME $C_{w,k}$**

S705 — **INCREASING CONFIDENCE LEVEL OF WIDTH OF OBJECT DETECTED FROM DISPARITY MAP OF K-1th FRAME $C_{w,k-1}$ TO OBTAIN CONFIDENCE LEVEL OF WIDTH OF OBJECT DETECTED FROM DISPARITY MAP OF Kth FRAME $C_{w,k}$**

S707 — **IS Change_h LESS THAN MAX_H_CHANGE ?**

NO ← → YES

S709 — **DECREASING CONFIDENCE LEVEL OF HEIGHT OF OBJECT DETECTED FROM DISPARITY MAP OF K-1th FRAME $C_{h,k-1}$ TO OBTAIN CONFIDENCE LEVEL OF HEIGHT OF OBJECT DETECTED FROM DISPARITY MAP OF Kth FRAME $C_{h,k}$**

S708 — **INCREASING CONFIDENCE LEVEL OF HEIGHT OF OBJECT DETECTED FROM DISPARITY MAP OF K-1th FRAME $C_{h,k-1}$ TO OBTAIN CONFIDENCE LEVEL OF HEIGHT OF OBJECT DETECTED FROM DISPARITY MAP OF Kth FRAME $C_{h,k}$**

S710 — **IS Change_d LESS THAN MAX_D_CHANGE ?**

NO ← → YES

S712 — **DECREASING CONFIDENCE LEVEL OF MOVEMENT DISTANCE OF OBJECT DETECTED FROM DISPARITY MAP OF K-1th FRAME $C_{d,k-1}$ TO BTAIN CONFIDENCE LEVEL OF MOVEMENT DISTANCE OF OBJECT DETECTED FROM DISPARITY MAP OF Kth FRAME $C_{d,k}$**

S711 — **INCREASING CONFIDENCE LEVEL OF MOVEMENT DISTANCE OF OBJECT DETECTED FROM DISPARITY MAP OF K-1th FRAME $C_{d,k-1}$ TO OBTAIN CONFIDENCE LEVEL OF MOVEMENT DISTANCE OF OBJECT DETECTED FROM DISPARITY MAP OF Kth FRAME $C_{d,k}$**

```
( END )
```

# FIG.8

Nth FRAME

$W_{N,correct}/2 - W_{N,detection}/2$

$X_{object,N,detection}$

# FIG.9

900

DISPARITY MAP → DETECTION UNit (910)

DISPARITY MAP → PREDICTION UNIT (920)

CORRECTION UNIT (930)

# FIG.10

1000

INPUT APPARATUS (1010) — PROCESSING APPARATUS (1020) — OUTPUT APPARATUS (1030)

STORAGE APPARATUS (1040)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7660438 B2

- CN 201310364526

**Non-patent literature cited in the description**

- Coupled Detection and Trajectory Estimation for Multi-Object Tracking. **BASTIAN LEIBE et al.** COMPUTER VISION, 2007. ICCV 2007. IEEE 11TH INTERNATIONAL CONFERENCE O N. IEEE, 01 October 2007, 1-8